# EUROPEAN PATENT APPLICATION

(11) **EP 3 879 718 A1**
(43) Date of publication of application: **15.09.2021**
(21) Application number: 19881888.2
(22) Date of filing: 08.11.2019
(51) Int. Cl.: H04B 7/06

(54) **INTER-CELL INTERFERENCE COORDINATION METHOD, BASE STATION, AND STORAGE MEDIUM**

(30) Priority: 09.11.2018 CN 201811334421
(71) Applicant: ZTE Corporation, shenzhen Guangdong 518057 (CN)
(72) Inventor: WU, Gang, Shenzhen, Guangdong 518057 (CN)
(74) Representative: Canzler & Bergmeier Patentanwälte Partnerschaft mbB
(86) International application number: PCT/CN2019/116640
(87) International publication number: WO 2020/094128

(57) **Abstract**

Embodiments of the present invention provide an inter-cell interference coordination method, a base station, and a storage medium. The method comprises: sending radio resource configuration (RRC) information to a first terminal of a cell; and receiving a measurement value of a signal receiving parameter reported by the first terminal on the basis of the RRC, and when determining that the measurement value satisfies a setting condition, performing interference coordination by using a corresponding mixed beamforming policy according to position information of the first terminal or beam number information.

## Description

### TECHNICAL FIELD

The present disclosure relates to, but is not limited to, the field of wireless communications.

### BACKGROUND

An important characteristic of a fifth generation mobile communication (5G) system is adopting Massive Multiple-Input Multiple-Output (Massive MIMO) as a key technology to improve the reliability and capacity of the system and expanding cell coverage. In order to meet a high system capacity requirement for a 5G system specified by International Mobile Telecommunications-2020 of the International Telecommunication Union (ITU IMT-2020), the 5G New Radio (5G NR) of the 3^{rd} Generation Partnership Project (3GPP) adopts 64-port Massive MIMO, which is a great improvement compared with a maximum of 8 antenna ports of the 4th Generation Long Term Evolution-Advanced (4G LTE-A). In addition, the 5G system adopts a networking form of denser site deployment, and makes the site deployment much denser by deploying small cells, relays and pico cells. A special research of Integrated Access and Backhaul (IAB) for NR was carried out in the discussion of 3GPP R16 standards, so that a terminal can capture more frequency spectrums in a certain area, which improves spectrum efficiency of system, thereby greatly improving system capacity.

However, with the increase of cell density, the problem of inter-cell interference becomes more prominent, and interference becomes a major factor that restricts performance. The 4G LTE-A has already been faced with an interference environment in a heterogeneous network, in which a User Equipment (UE) suffers strong interference from neighboring cells, and the interference strength may even exceed the transmission power of the cell where the UE is located. In order to combat the interference from the neighboring cells, the receiver uses a Network Assisted Interference Cancellation and Suppression (NAICS) technology. For 5G complex interference environments, several anti-interference technologies, such as advanced receivers (that is, NAICS receivers), interference measurement using sounding reference signal (SRS), and cooperative beamforming, are specifically discussed in 3GPP R15 standards. As for the anti-interference technology adopting the NAICS receivers, the NAICS can only process one or two strong interference sources due to terminal complexity, that is, the NAICS has limited processing capability, therefore, the NAICS cannot meet the requirements of the complex interference environments in the 5G NR dense network; as for the anti-interference technology adopting interference measurement using SRS, the interference measurement using SRS can be applied to the interference between UEs, but cannot solve the problem of inter-cell interference; and as for the anti-interference technology adopting cooperative beamforming, all UEs are required to measure the interference from a base station of a neighboring cell and the interference of a terminal of the neighboring cell in real time for each beam and report the interference measurement results, each cell makes an interference table of various interference conditions, and interference coordination is carried out between the cells according to the interference tables; but the anti-interference technology adopting cooperative beamforming is difficult to implement due to a tremendous amount of feedback and long latency.

### SUMMARY

In a first aspect, an embodiment of the present disclosure provides an inter-cell interference coordination method applied to a first base station, including sending Radio Resource Control (RRC) information to a first terminal in a cell where the first base station is located; and receiving a measured value of a signal receiving parameter reported by the first terminal based on the RRC information, and performing interference coordination using a corresponding hybrid beamforming strategy according to location information of the first terminal or beam number information when it is determined that the measured value meets a set condition.

In a second aspect, an embodiment of the present disclosure provides a base station, including a processor and a memory configured to store a computer program capable of running on the processor. The processor is configured to perform the inter-cell interference coordination method according to any one embodiment of the present disclosure when running the computer program.

In a third aspect, an embodiment of the present disclosure provides a storage medium having a computer program stored thereon. When the computer program is executed by a processor, the inter-cell interference coordination method according to any one embodiment of the present disclosure is implemented.

### BRIEF DESCRIPTION OF THE DRAWINGS

Fig. 1 is a schematic diagram of a first application scenario of an inter-cell interference coordination method according to the present disclosure;
Fig. 2 is a first flowchart illustrating an inter-cell interference coordination method according to the present disclosure;
Fig. 3 is a schematic diagram of a second application scenario of an inter-cell interference coordination method according to the present disclosure;
Fig. 4 is a second flowchart illustrating an inter-cell interference coordination method according to the present disclosure;
Fig. 5 is a third flowchart illustrating an inter-cell interference coordination method according to the present disclosure;
Fig. 6 is a schematic diagram of a third application scenario of an inter-cell interference coordination method according to the present disclosure;
Fig. 7 is a fourth flowchart illustrating an inter-cell interference coordination method according to the present disclosure;
Fig. 8 is a fifth flowchart illustrating an inter-cell interference coordination method according to the present disclosure;
Fig. 9 is a sixth flowchart illustrating an inter-cell interference coordination method according to the present disclosure;
Fig. 10 is a schematic diagram of a fourth application scenario of an inter-cell interference coordination method according to the present disclosure;
Fig. 11 is a seventh flowchart illustrating an inter-cell interference coordination method according to the present disclosure;
Fig. 12 is a schematic structural diagram of an inter-cell interference coordination device according to the present disclosure; and
Fig. 13 is a schematic structural diagram of a base station according to the present disclosure.

### DETAILED DESCRIPTION

In order to enable those of ordinary skill in the art to learn more details of the technical features and the technical content of the embodiments of the present disclosure, a detailed description is given below with reference to the drawings and the implementations of the embodiments of the present disclosure. The accompanying drawings are merely used for illustration, and are not intended to limit the embodiments of the present disclosure.

Unless otherwise defined, all the technical terms or scientific terms used herein have general meanings that can be understood by those of ordinary skill in the technical field of the present disclosure. The terms used in the specification of the present disclosure are merely intended to describe specific embodiments, rather than limiting the present disclosure. The term "and/or" used herein includes any combination or all combinations of one or more related listed items.

In the following description, the expression "some embodiments" indicates a subset of all possible embodiments, but it should be understood that "some embodiments" may indicate the same subset or different subsets of all possible embodiments, and may be combined with each other without conflict.

At present, how to better reduce the interference in the complex interference environments of 5G NR to realize high system capacity is still an urgent technical problem. According to an embodiment of the present disclosure, the interference in a dense network environment can be reduced to the greatest extent, thereby improving the capacity of a communication system and the receiving performance of a terminal.

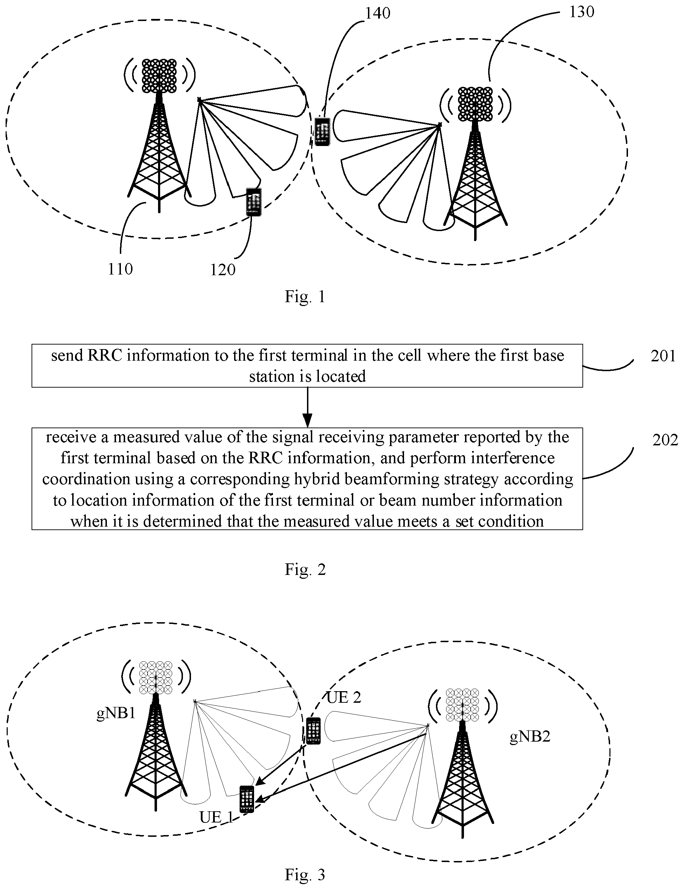

Fig. 1 provides a schematic diagram of an operating system architecture to which an inter-cell interference coordination method provided by the present disclosure is applied. The operating system architecture includes a first base station 110, a first terminal 120 corresponding to the cell where the first base station 110 is located, a second base station 130, and a second terminal 140 corresponding to the cell where the second base station 130 is located.

The first base station 110 and the second base station 130 may be macro base stations (gNBs), small cells, relays, micro cells, pico cells or home base stations (HeNBs); the first base station 110 and the second base station 130 may have peer-to-peer structures, for example, each of the first base station 110 and the second base station 130 is one of a gNB, a small cell, a relay, a micro cell, a pico cell and an HeNB; and the first base station 110 and the second base station 130 may have different structures, for example, the first base station 110 is a gNB and the second base station 130 is one of a small cell, a relay, a micro cell, a pico cell and an HeNB, or the second base station 130 is a gNB, and the first base station 110 is one of a small cell, a relay, a micro cell, a pico cell and an HeNB. The first terminal 120 and the second terminal 140 may be UEs which are connected to a wireless communication network, and transmit and receive data. The term "terminal" herein may be replaced with a term such as "UE", "Mobile Station (MS)", "Mobile Subscriber Station (MSS)", "Subscriber Station (SS)", "Advanced Mobile Station (AMS)", "Wireless Terminal (WT)", "Machine Type Communication (MTC) device", "Machine to Machine (M2M) device", "Device-to-Device (D2D) device" and "Station (STA)", but the terminal stated in the specification is not limited thereto, and may be any device connected to the wireless communication network provided by the present disclosure.

In some embodiments, the interference to be subjected to interference coordination includes downlink interference from an interference neighboring cell and uplink interference from an interference terminal. The interference neighboring cell may include a peer-to-peer homogeneous cell, and a heterogeneous cell including a relay or a micro cell.

Fig. 2 is a flowchart illustrating an inter-cell interference coordination method according to the present disclosure. For example, the inter-cell interference coordination method can be applied to the first base station shown in Fig. 1, and includes the following steps 201 and 202 as shown in Fig. 2.

In the step 201, RRC information is sent to the first terminal in the cell where the first base station is located.

The first base station sends the RRC information to the first terminal to enable the first terminal to measure a signal receiving parameter, which includes Channel State Information-Reference Signal Received Power (CSI-RSRP) and/or Channel State Information-Reference Signal Received Quality (CSI-RSRQ). The first terminal reports the measured CSI-RSRP and/or the measured CSI-RSRQ to the first base station. In an implementation, the first terminal receives RRC information from a plurality of cells including an interference neighboring cell, generates the CSI-RSRP and/or the CSI-RSRQ corresponding to the plurality of cells, and uploads the CSI-RSRP and/or the CSI-RSRQ of the plurality of cells to the first base station.

In the step 202, a measured value of the signal receiving parameter reported by the first terminal based on the RRC information is received, and interference coordination is performed using a corresponding hybrid beamforming strategy according to location information of the first terminal or beam number information when it is determined that the measured value meets a set condition.

The set condition refers to that the measured value of the signal receiving parameter is less than a preset threshold value. After the first base station receives the measured values of CSI-RSRP and/or CSI-RSRQ of the plurality of cells from the first terminal, the first base station determines that the measured values meet the set condition when all the measured values of CSI-RSRP and/or CSI-RSRQ are less than the corresponding preset threshold. Optionally, a step of determining that the measured value meets the set condition is determining that the measured value of the signal receiving parameter of the cell where the first base station is located meets the set condition and a measured value of a signal receiving parameter reported by the second terminal in the interference neighboring cell corresponding to the cell where the first base station is located also meets the set condition. A step of determining, by the first base station, the interference neighboring cell corresponding to the cell where the first base station is located includes that the first base station receives the measured values of CSI-RSRP and/or CSI-RSRQ of the plurality of cells sent by the first terminal, determines the two measured values which rank first and second, and determines two corresponding neighboring cells according to the two measured values which rank first and second. The two corresponding neighboring cells are the cell where the first terminal is currently located and the corresponding interference neighboring cell (the first terminal is located at an edge of the two neighboring cells). By determining the interference neighboring cell corresponding to the cell where the first terminal is located, the first base station can easily adopt a corresponding hybrid beamforming strategy to perform interference coordination on the cell where the first terminal is located and the corresponding interference neighboring cell.

In one example, the measured values uploaded by the first terminal correspond to the CSI-RSRP of the plurality of cells. Assuming that a measured value of CSI-RSRP generated by the first terminal corresponding to a cell is Ai, the measured values received by the first base station can be represented as {A1, ... An}, where i ∈ n and n is a natural number greater than 1. When the first base station determines that each Ai is less than a first set threshold according to the received measured values, the first base station can determine that the first terminal is interfered by a neighboring cell, determine the interference neighboring cell corresponding to the first terminal according to the Ai corresponding to the greatest measured value and the Ai corresponding to the second greatest measured value, and then perform interference coordination with the interference neighboring cell.

In one example, the measured values uploaded by the first terminal correspond to the CSI-RSRQ of the plurality of cells. Assuming that a measured value of CSI-RSRQ generated by the first terminal corresponding to a cell is Bi, the measured values received by the first base station can be represented as {B1, ... Bn}, where i ∈ n and n is a natural number greater than 1. When the first base station determines that each Bi is less than a second set threshold according to the received measured values, the first base station can determine that the first terminal is interfered by a neighboring cell, determine the interference neighboring cell corresponding to the first terminal according to the Bi corresponding to the greatest measured value and the Bi corresponding to the second greatest measured value, and then perform interference coordination with the interference neighboring cell.

In one example, the measured values uploaded by the first terminal correspond to the CSI-RSRP and the CSI-RSRQ of the plurality of cells. Assuming that a measured value corresponding to a cell, which is obtained by subjecting the CSI-RSRP and the CSI-RSRQ to a weighted sum method by the first terminal, is Ci, the measured values received by the first base station can be represented as {C1, ... Cn}, where i ∈ n and n is a natural number greater than 1. When the first base station determines that each Ci is less than a third set threshold according to the received measured values, the first base station can determine that the first terminal is interfered by a neighboring cell, determine the interference neighboring cell corresponding to the first terminal according to the Ci corresponding to the greatest measured value and the Ci corresponding to the second largest measured value, and then perform interference coordination with the interference neighboring cell.

The beam number information refers to the beam number information corresponding to beam pairing of the cell where the first terminal is located and the interference neighboring cell. By performing interference coordination using the corresponding hybrid beamforming strategy according to the location information of the first terminal or the beam number information, the interference coordination requirements of a set scene of the cell where the first terminal is located relative to the interference neighboring cell, such as a homogeneous or heterogeneous cell, and an indoor or outdoor scene, can be met. The set scene includes that the cell where the first terminal is located is in an outdoor scene of a homogeneous cell relative to the interference neighboring cell, that the cell where the first terminal is located is in an indoor scene of a homogeneous cell relative to the interference neighboring cell, and that the cell where the first terminal is located is in a heterogeneous cell relative to the interference neighboring cell. The interference coordination is performed using the corresponding hybrid beamforming strategy according to the location information of the first terminal or the beam number information, so that the beamforming strategy can be correspondingly set based on the different scenes of the first terminal, so as to meet the requirements of interference coordination of the first terminal in the different scenes or in processes of switching between the scenes. For example, for the outdoor scene of a homogeneous cell, in which satellite navigation signals can be received well, interference coordination can be performed using hybrid beamforming based on the location information of the terminal; for the indoor scene of a homogeneous cell, in which the quality of received satellite navigation signals is poor due to blocking objects, interference coordination can be performed using hybrid beamforming based on the beam number information; and for the scene of a heterogeneous cell, interference coordination can be performed using analog beamforming based on the beam number information corresponding to beam pairing of heterogeneous cells.

In the above embodiments of the present disclosure, the first base station sends the RRC information to the first terminal in the cell where the first base station is located, receives the measured value of the signal receiving parameter reported by the first terminal based on the RRC information, and performs interference coordination using the corresponding hybrid beamforming strategy according to the location information of the first terminal or the beam number information when it is determined that the measured value meets the set condition, the hybrid beamforming strategy may include starting to perform digital beamforming and/or analog beamforming based on the location information or the beam number information to carry out interference coordination, and pointing a beam from the base station towards the terminal of the cell where the base station is located. The method can effectively reduce the interference from the base station of the neighboring cell and the terminal of the neighboring cell, is applicable to situations involving a plurality of interference sources and different complex cell deployment scenes, and can improve the receiving performance of a terminal and the capacity of a communication system.

It should be noted that the cell where the first base station is located and the cell where the second base station is located are interference neighboring cells relative to each other, and the first base station and the second base station can be interchanged, that is, the inter-cell interference coordination method according to the above embodiments can also be applied to the second base station shown in Fig. 1, and the application of the inter-cell interference coordination method to the second base station is the same as the application of the inter-cell interference coordination method to the first base station, and thus is not repeated here.

In some embodiments, the step of performing interference coordination using the corresponding hybrid beamforming strategy according to the location information of the first terminal includes acquiring the location information of the first terminal; and determining whether the location information of the first terminal can be distinguished from location information of the second terminal in the interference neighboring cell according to the location information of the first terminal, and performing interference coordination on the first terminal using analog beamforming or digital beamforming according to whether the location information of the first terminal can be distinguished from that of the second terminal.

The first base station performs interference coordination using the corresponding hybrid beamforming strategy based on the location information of the terminal. The step of determining whether the location information of the first terminal can be distinguished from that of the second terminal in the interference neighboring cell according to the location information of the first terminal includes that the first base station receives the location information of the second terminal sent by the second base station corresponding to the interference neighboring cell, and determines whether the location information of the first terminal can be distinguished from that of the second terminal according to the location information of the first and second terminals. When the location information of the first terminal can be distinguished from that of the second terminal, which indicates that the first terminal can be distinguished from the second terminal with analog beams, the first base station performs analog beamforming on the first terminal to suppress the interference from the second terminal, and correspondingly, the second base station performs analog beamforming on the second terminal to suppress the interference from the first terminal, thereby completing interference coordination. On the contrary, when the location information of the first terminal cannot be distinguished from that of the second terminal, which indicates that the use of analog beams cannot distinguish the first terminal from the second terminal, the first base station forms a digital beam for the first terminal under a selected analog beam, and correspondingly, the second base station forms a digital beam for the second terminal under a selected analog beam, thereby completing interference coordination using the hybrid beamforming.

In some embodiments, before the step of determining whether the location information of the first terminal can be distinguished from the location information of the second terminal in the interference neighboring cell according to the location information of the first terminal, the method further includes acquiring the location information of the second terminal sent by the second base station corresponding to the interference neighboring cell; and/or, after the step of acquiring the location information of the first terminal, the method further includes sending the location information of the first terminal to the second base station corresponding to the interference neighboring cell.

The first base station sends the location information of the first terminal to the second base station corresponding to the interference neighboring cell before determining whether the location information of the first terminal can be distinguished from that of the second terminal in the interference neighboring cell according to the location information of the first terminal. Since the first base station and the second base station can be interchanged, the second base station also sends the location information of the second terminal to the first base station, so the first base station can determine whether the location information of the first terminal can be distinguished from that of the second terminal in the interference neighboring cell according to the location information of the first terminal in the cell where the first base station is located and the location information of the second terminal received from the second base station corresponding to the interference neighboring cell.

In an optional implementation, the first base station transfers the location information of the first terminal to the second base station through an X2 interface after acquiring the location information of the first terminal. Similarly, the second base station transfers the location information of the second terminal to the first base station through an X2 interface after acquiring the location information of the second terminal.

After acquiring the location information of the first and second terminals, the first base station can determine whether the location information of the first terminal can be distinguished from that of the second terminal according to whether a difference between the location information of the first terminal and that of the second terminal meets a requirement of a set distinguishing threshold value. Interference coordination is performed on the first terminal using analog beamforming or digital beamforming according to whether the location information of the first terminal can be distinguished from that of the second terminal.

In some embodiments, the step of performing interference coordination on the first terminal using analog beamforming or digital beamforming according to whether the location information of the first terminal can be distinguished from that of the second terminal includes performing interference coordination on the first terminal using analog beamforming when it is determined that the location information of the first terminal can be distinguished from that of the second terminal; or performing interference coordination on the first terminal using digital beamforming when it is determined that the location information of the first terminal cannot be distinguished from that of the second terminal.

When the first base station determines that the location information of the first terminal can be distinguished from that of the second terminal, which indicates that the first terminal can be distinguished from the second terminal with analog beams, the first base station performs interference coordination on the first terminal using analog beamforming. The second base station and the first base station are interference neighboring cells relative to each other, so the second base station also performs interference coordination on the second terminal using analog beamforming. When the first base station determines that the location information of the first terminal cannot be distinguished from that of the second terminal, which indicates that the use of analog beams cannot distinguish the first terminal from the second terminal, the first base station performs interference coordination on the first terminal using digital beamforming, and similarly, the second base station also performs interference coordination on the second terminal using digital beamforming.

It should be noted that whether the location information of the first terminal can be distinguished from that of the second terminal may change. The first base station can send the RRC information to the first terminal periodically, start location query when determining that the measured value meets the set condition based on the measured value uploaded by the first terminal, acquire the location information of the first terminal, and send the location information of the first terminal to the second base station; similarly, the second base station can send the RRC information to the second terminal periodically, start location query when determining that the measured value meets the set condition based on the measured value uploaded by the second terminal, acquire the location information of the second terminal, and send the location information of the second terminal to the first base station. The first base station or the second base station determines whether the location information of the first terminal can be distinguished from that of the second terminal according to the acquired location information of the first and second terminals.

In some embodiments, the step of performing interference coordination on the first terminal using analog beamforming includes configuring a gain weight for a transmitting antenna according to the location information of the first terminal and that of the second terminal, forming an analog beam according to the gain weight, and pointing a peak direction of the analog beam towards the position of the first terminal and a trough direction of the analog beam towards the position of the second terminal respectively; and the step of performing interference coordination on the first terminal using digital beamforming includes receiving a feedback value of channel state information reported by the first terminal based on the RRC information, configuring a precoding codebook under a selected analog beam according to the feedback value to form a digital beam, and pointing the digital beam towards the first terminal.

The step of performing interference coordination by the first base station on the first terminal using analog beamforming includes configuring a proper gain weight to generate an analog beam, and pointing the peak direction of the analog beam towards the position of the first terminal and the trough direction of the analog beam towards the position of the second terminal. By configuring the proper gain weight and determining the directions of the analog beam according to the positions of the terminals, the interference from the second terminal in the interference neighboring cell can be suppressed to the greatest extent. The gain weight includes an amplitude weight value and/or a phase weight value, the amplitude or the phase or the amplitude and the phase of the transmitting antenna are adjusted according to the gain weight to form the analog beam, and the peak direction of the analog beam is pointed towards the position of the first terminal and the trough direction of the analog beam is pointed towards the position of the second terminal in the interference neighboring cell. Similarly, the second base station points a peak direction of an analog beam towards the position of the second terminal and a trough direction of the analog beam towards the position of the first terminal, so as to suppress the interference from the first terminal.

The step of performing interference coordination by the first base station using digital beamforming includes receiving a feedback value of channel state information reported by the first terminal based on the RRC information, configuring a precoding codebook under a selected analog beam according to the feedback value to form a digital beam, and pointing the digital beam towards the first terminal. The first base station can send the RRC information to the first terminal periodically or when it is determined that digital beamforming is required, and the first terminal is enabled to calculate the feedback value of channel state information according to the received RRC information. In the embodiment, the feedback value includes: a CSI-RS Resource Indicator (CRI), a Rank Indicator (RI), a Precoding Matrix Indicator (PMI) and a Channel Quality Indicator (CQI). The first terminal can generate the feedback value according to the requirements of maximal system capacity of digital beamforming and report the feedback value to the first base station, and the first base station configures a proper precoding codebook for a transmitting port under the selected analog beam according to the feedback value to form the digital beam, and the digital beam from the first base station is pointed towards the first terminal, thereby completing interference coordination using hybrid beamforming.

In some embodiments, the step of acquiring the location information of the first terminal includes sending a positioning request for acquiring the location information of the first terminal to a Mobile Management Entity (MME), with the positioning request used for enabling an Evolved Serving Mobile Location Center (E-SMLC) to acquire positioning capability information from the first terminal, determine the location information of the first terminal according to a measurement result of Global Navigation Satellite System (GNSS) of the first terminal and return the location information of the first terminal to the MME; and receiving the location information of the first terminal returned by the MME. Or, the step of acquiring the location information of the first terminal includes sending a positioning request for acquiring the location information of the first terminal to an MME, with the positioning request used for enabling an E-SMLC to acquire positioning capability information from the first terminal and enabling the first terminal to determine the location information thereof according to a measurement result of GNSS; and receiving the location information of the first terminal returned by the first terminal.

The first base station can acquire the location information of the first terminal with the following two methods.

### First method: acquiring the location information of the first terminal based on a network-side GNSS

The first base station sends a first positioning request for acquiring the location information of the first terminal to the MME; the MME sends a second positioning request to the E-SMLC according to the first positioning request; the E-SMLC sends a positioning capability query request to the first terminal according to the second positioning request; the first terminal reports positioning capability information to the E-SMLC according to the positioning capability query request and requests assistance data from the E-SMLC, and then the first terminal performs GNSS positioning measurement according to the assistance data provided by the E-SMLC and returns the positioning measurement result to the E-SMLC; the E-SMLC calculates the location information of the first terminal according to the positioning measurement result and sends the location information of the first terminal to the MME; and the MME sends the location information of the first terminal to the first base station.

By adopting the network-side GNSS, precision positioning can be achieved with the positioning accuracy of less than 5m, which facilitates performing analog beamforming based on the location information.

The first method is particularly suitable for a scene in which the cell where the first base station is located and the corresponding interference neighboring cell form homogeneous cells, and the first terminal and the second terminal are located outdoors.

### Second method: acquiring the location information of the first terminal based on a terminal side

The first base station sends a first positioning request for acquiring the location information of the first terminal to the MME; the MME sends a second positioning request to the E-SMLC according to the first positioning request; the E-SMLC sends a positioning capability query request to the first terminal according to the second positioning request; and the first terminal reports positioning capability information to the E-SMLC according to the positioning capability query request and requests assistance data from the E-SMLC, and then the first terminal performs GNSS positioning measurement according to the assistance data provided by the E-SMLC, performs calculation locally to obtain the location information of the first terminal, and sends the location information of the first terminal to the first base station.

The use of the GNSS measurement result from the terminal side can facilitate the analog beamforming based on the location information.

The second method is particularly suitable for a scene in which the cell where the first base station is located and the corresponding interference neighboring cell form homogeneous cells, and the first terminal and the second terminal are located outdoors.

In the above embodiments of the present disclosure, when the first base station determines that the measured value meets the set condition according to the measured value of the signal receiving parameter reported by the first terminal based on the RRC information, the first base station determines whether the location information of the first terminal can be distinguished from that of the second terminal in the interference neighboring cell according to the acquired location information of the first and second terminals, and performs interference coordination on the first terminal using analog beamforming or digital beamforming according to whether the location information of the first terminal can be distinguished from that of the second terminal. When the location information of the first terminal can be distinguished from that of the second terminal, analog beamforming is performed, and the peak of the analog beam from the first base station is pointed towards the first terminal and the trough of the analog beam from the first base station is pointed towards the second terminal respectively. When the location information of the first terminal cannot be distinguished from that of the second terminal, digital beamforming is performed under the selected analog beam, and the digital beam from the first base station is pointed towards the first terminal for interference coordination. In this way, the interference from the terminal of the neighboring cell and the interference from the base station of the neighboring cell can be effectively reduced, thereby improving the receiving performance of a terminal and the capacity of a communication system.

In some embodiments, the step of performing interference coordination using the corresponding hybrid beamforming strategy according to the beam number information includes sending a first interference coordination request to the second base station corresponding to the interference neighboring cell of the first terminal; and performing analog beamforming on the first terminal according to the corresponding beam number information after receiving a second interference coordination request from the interference neighboring cell.

The first base station performs interference coordination using the corresponding hybrid beamforming strategy according to the beam number information. In some embodiments, when the first terminal or the second terminal moves indoors or is blocked by a blocking object, the base station cannot acquire the location information due to poor quality of the received satellite navigation signals, in which case interference coordination is performed according to the beam number information, so as to meet the interference coordination requirements of different scenes.

In some embodiments, before the first interference coordination request is sent to the second base station corresponding to the interference neighboring cell of the first terminal, the first base station and/or the second base station perform(s) interference coordination using the hybrid beamforming strategy based on the location information of the terminal. For example, after the first base station or the second base station performs interference coordination using analog beamforming or digital beamforming based on the location information of the terminal, the first base station starts to perform beamforming according to the beam number information when determining that the measured value still meets the set condition according to the measured value of the signal receiving parameter reported by the first terminal based on the RRC information, or the second base station starts to perform beamforming according to the beam number information when determining that the measured value still meets the set condition according to the measured value of the signal receiving parameter reported by the second terminal based on the RRC information. The method of performing interference coordination by the first base station and/or the second base station using the hybrid beamforming strategy based on the location information of the terminal is the same as what is described above, and thus is not repeated here.

The step of performing interference coordination by the first base station using the corresponding hybrid beamforming strategy according to the beam number information includes that the first base station sends the first interference coordination request to the second base station corresponding to the interference neighboring cell of the first terminal; and the first base station performs analog beamforming on the first terminal according to the corresponding beam number information after receiving the second interference coordination request from the interference neighboring cell. Similarly, since the cell where the second base station is located and the cell where the first base station is located are interference neighboring cells relative to each other, the second base station also performs interference coordination using the corresponding hybrid beamforming strategy according to the beam number information, that is, the second base station sends the second interference coordination request to the first base station, and performs analog beamforming on the second terminal according to the corresponding beam number information after receiving the first interference coordination request from the cell where the first base station is located.

The corresponding beam number information refers to the beam number information determined in the beam pairing with the interference neighboring cell. The first base station can determine the interference neighboring cell according to the measured value reported by the first terminal, and the step of determining the interference neighboring cell by the first base station includes that the first base station receives the measured values of CSI-RSRP and/or CSI-RSRQ of the plurality of cells sent by the first terminal, determines the two measured values which rank first and second, and determines two corresponding neighboring cells according to the two measured values which rank first and second. The two corresponding neighboring cells are the cell where the first terminal is currently located and the corresponding interference neighboring cell (the first terminal is located at the edge of the two neighboring cells). By determining the interference neighboring cell corresponding to the cell where the first terminal is located in this way, it is convenient to adopt a corresponding hybrid beamforming strategy to perform interference coordination on the cell where the first terminal is located and the corresponding interference neighboring cell. The pairing here refers to a combination of beam numbers which causes relatively small mutual interference between two cells and is preset in a network planning period. Thus, the interference between the two cells can be reduced by selecting proper beam number information to perform analog beamforming.

According to the above embodiments of the present disclosure, for the scene in which it is hard to acquire accurate location information of the terminal, the terminals are distinguished according to the beam numbers of the analog beams, and the two cells coordinate with each other to perform analog beamforming according to the beam number information causing relatively small interference, thereby effectively reducing the interference between the two cells.

In some embodiments, after a step of selecting preset beam number information paired with the interference neighboring cell to perform analog beamforming, the method further includes receiving the measured value of the signal receiving parameter reported by the first terminal based on the RRC information, receiving the feedback value of channel state information reported by the first terminal based on the RRC information when it is determined that the measured value meets the set condition, configuring the precoding codebook under the selected analog beam according to the feedback value to form the digital beam, and pointing the digital beam towards the first terminal.

If the interference between the two cells still exists after the analog beamforming based on the beam number information is performed, for example, when the first base station determines that the measured value is still less than the set threshold according to the measured value of the signal receiving parameter reported by the first terminal based on the RRC information, the first base station performs digital beamforming on the first terminal. The first terminal is enabled to calculate the feedback values of channel state information according to the received RRC information, and the feedback values include a CRI, an RI, a PMI and a CQI. The first terminal generates the feedback values according to the requirements of maximal system capacity of digital beamforming and reports the feedback value to the first base station, and the first base station configures a proper precoding codebook for a transmitting port under the selected analog beam according to the feedback values to form the digital beam, and the digital beam from the first base station is pointed towards the first terminal, thereby completing interference coordination using hybrid beamforming.

Similarly, when the second base station determines that the measured value is still less than the set threshold according to the measured value of the signal receiving parameter reported by the second terminal based on the RRC information, the second base station performs digital beamforming on the second terminal. The second terminal is enabled to calculate the feedback values of channel state information according to the received RRC information, and the feedback values include a CRI, an RI, a PMI and a CQI. The second terminal generates the feedback values according to the requirements of maximal system capacity of digital beamforming and reports the feedback value to the second base station, and the second base station configures a proper precoding codebook for a transmitting port under the selected analog beam according to the feedback values to form the digital beam, and the digital beam from the second base station is pointed towards the second terminal, thereby completing interference coordination using hybrid beamforming.

According to the above embodiment of the present disclosure, in the case where the interference is not eliminated after analog beamforming is performed according to the beam number information, the first base station further performs digital beamforming and the digital beam from the first base station is pointed towards the first terminal for further suppressing the interference, thereby improving the receiving performance of a terminal and the capacity of a communication system. Such method is particularly suitable for interference coordination when the cell where the first base station is located and the corresponding interference neighboring cell form homogeneous cells, and the first terminal and the second terminal move from an outdoor scene to an indoor scene.

In some embodiments, the step of performing interference coordination using the corresponding hybrid beamforming strategy according to the beam number information includes selecting the beam number information corresponding to the beam pairing with the interference neighboring cell corresponding to the cell where the first base station is located to perform analog beamforming, with the cell where the first base station is located and the interference neighboring cell forming heterogeneous cells.

The first base station performs interference coordination using analog beamforming according to the beam number information corresponding to the beam pairing of heterogeneous cells. The interference neighboring cell is a heterogeneous cell corresponding to the cell where the first base station is located, and the pairing here refers to a combination of beam numbers which causes relatively small mutual interference between two cells and is preset in a network planning period, so that the interference between the two cells can be reduced by selecting proper beam number information to perform analog beamforming.

In the embodiment where the cell where the first base station is located and the interference neighboring cell form heterogeneous cells, the first base station may be a small cell, a relay or a pico cell, and the second base station may be different from the first base station and may be a 5G NR gNB.

The first base station sends the RRC information to the first terminal, which also receives the RRC information sent by the second base station. The first terminal generates a first measured value according to the RRC information sent by the first base station, generates a second measured value according to the RRC information sent by the second base station, and reports the obtained first and second measured values to the first base station, and the first base station forwards the first and second measured values to the second base station. When the first base station determines that both the first measured value and the second measured value are less than the corresponding set threshold, the first base station can determine that the first terminal has moved to an area with stronger interference from the second base station (a macro base station), so that the first base station selects the beam number information paired with the second base station to perform analog beamforming. The beam number information is a combination of beam numbers which causes relatively small mutual interference between the first base station and the second station and is preset in a network planning period, so that the interference between the two cells can be reduced by selecting the proper beam number information to perform analog beamforming. Similarly, when the second base station determines that both the first measured value and the second measured value are less than the corresponding set threshold, the second base station selects the beam number information paired with the first base station to perform analog beamforming, and the trough direction of the analog beam from the second base station is pointed towards the first terminal.

In the above embodiments of the present disclosure, when the first base station determines that the measured value meets the set condition according to the measured value of the signal receiving parameter uploaded by the first terminal, the first base station performs analog beamforming according to the beam number information of the beam pairing preset for the heterogeneous cells in the network planning period, thereby effectively reducing the interference between the two cells.

In the existing art, interference coordination is generally carried out according to interference measurement and feedback of each resource block, and a large amount of interference information measured by each beam needs to be fed back in real time. For example, when a single carrier of a single port of a 5G UE has the bandwidth of 100MHz, 272 resource blocks need to be subjected to interference measurement and feedback if the subcarrier spacing is 30kHz. The embodiments of the present disclosure provide a method which can reduce the interference from the base station of the neighboring cell and the interference from the terminal of the neighboring cell by performing hybrid beamforming based on the location information or the beam number information, and the method is applicable to different complex cell deployment scenes and multiple interference sources, and can improve the receiving performance of a terminal and the system capacity, with no need for real-time feedback of a large amount of interference information measured by each beam. According to the embodiments, one UE can perform interference coordination according to only one piece of location information or beam number information and the measured information of CSI-RSRP and CSI-RSRQ of the cells, which greatly reduces the complexity of measurement and feedback. Moreover, the complexity of achieving interference coordination through processing of Massive MIMO is reduced through the combination of analog beamforming and digital beamforming.

In order to further understand the implementation of the inter-cell interference coordination method provided by the embodiments of the present disclosure, specific implementations of the inter-cell interference coordination method are described below by taking multiple application scenarios as examples.

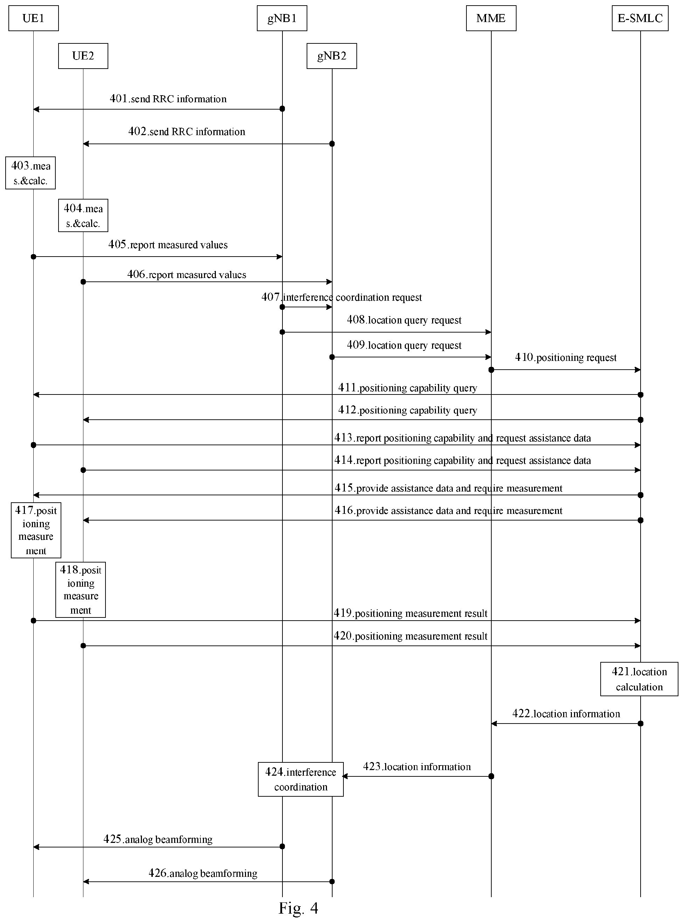

Fig. 3 is a schematic structural diagram of a second application scenario of an inter-cell interference coordination method according to the present disclosure. In this application scenario, the first base station is a gNB1, the second base station is a gNB2, a cell where the first base station gNB1 is located (hereinafter referred to as the cell) and a corresponding interference neighboring cell (hereinafter referred to as the neighboring cell) form homogeneous cells, the first terminal UE1 and the second terminal UE2 are located outdoors, the gNB1 in the cell and the gNB2 in the neighboring cell may be 5G NR macro base stations with the same processing capability, the expected user UE1 and the interference user UE2 are located at the edges of the two cells, the position of the UE1 can be distinguished from that of the UE2, and the interference in the UE1 mainly includes the downlink interference from the gNB2 and the uplink interference from the UE2. With reference to Fig. 4, the inter-cell interference coordination method includes the following steps 401 to 426.

In the step 401, the gNB1 sends RRC information to the UE1.

The gNB1 sends the RRC information to the UE1 of the cell where the gNB1 is located, so as to enable the UE1 to measure CSI-RSRP and CSI-RSRQ.

In the step 402, the gNB2 sends RRC information to the UE2.

The gNB2 sends the RRC information to the UE2 of the cell where the gNB2 is located, so as to enable the UE2 to measure CSI-RSRP and CSI-RSRQ.

In the step 403, the UE1 performs measurement and calculation.

The UE1 measures CSI-RSRP and CSI-RSRQ to generate measured values of CSI-RSRP and CSI-RSRQ. It should be noted that the UE1 can generate measured values corresponding to a plurality of cells when receiving RRC information from the plurality of cells including the interference cell.

In the step 404, the UE2 performs measurement and calculation.

The UE2 measures CSI-RSRP and CSI-RSRQ to generate measured values of CSI-RSRP and CSI-RSRQ. It should be noted that the UE2 can generate measured values corresponding to a plurality of cells when receiving RRC information from the plurality of cells including the interference cell.

In the step 405, the UE1 reports the measured values.

The UE1 reports the generated measured values to the gNB1.

In the step 406, the UE2 reports the measured values.

The UE2 reports the generated measured values to the gNB2.

In the step 407, the gNB1 sends an interference coordination request to the gNB2.

The gNB1 determines whether the UE1 is interfered according to the measured values received from the UE1. Specifically, for the measured values of CSI-RSRP and CSI-RSRQ of the plurality of cells generated by the UE1, if the measured values of CSI-RSRP and CSI-RSRQ of all the cells are less than a set threshold, two neighboring cells currently corresponding to the UE1 can be determined by finding out the largest measured value and the second largest measured value, so the interference neighboring cell corresponding to the UE1 can be determined, and then interference coordination is performed with the interference neighboring cell. In the embodiment, the gNB1 may send the interference coordination request to the gNB2 through an X2 interface when determining that the UE1 is interfered by the gNB2.

Similarly, the gNB2 determines whether the UE2 is interfered according to the measured values received from the UE2. Specifically, for the measured values of CSI-RSRP and CSI-RSRQ of the plurality of cells generated by the UE2, if the measured values of CSI-RSRP and CSI-RSRQ of all the cells are less than a set threshold, two neighboring cells currently corresponding to the UE2 can be determined by finding out the largest measured value and the second largest measured value, so the interference neighboring cell corresponding to the UE2 can be determined, and then interference coordination is performed with the interference neighboring cell. In the embodiment, the gNB2 may send the interference coordination request to the gNB 1 through an X2 interface when determining that the UE2 is interfered by the gNB 1.

In the step 408, the gNB1 sends a location query request to an MME.

It should be noted that the gNB 1 may send the location query request to the MME when the gNB1 determines according to the measured values from the UE1 that the UE1 is interfered or when the gNB1 receives an interference coordination request sent by an interference neighboring cell (such as the gNB2).

In the step 409, the gNB2 sends a location query request to the MME

It should be noted that the gNB2 may send the location query request to the MME when the gNB2 determines according to the measured values from the UE2 that the UE2 is interfered or when the gNB2 receives an interference coordination request sent by an interference neighboring cell (such as the gNB1).

In the step 410, the MME sends a positioning request to an E-SMLC.

The MME sends the positioning request to the E-SMLC according to the received location query request.

In the step 411, the E-SMLC sends positioning capability query information to the UE1.

In the step 412, the E-SMLC sends positioning capability query information to the UE2.

In the step 413, the UE1 reports positioning capability information to the E-SMLC and requests assistance data.

In the step 414, the UE2 reports positioning capability information to the E-SMLC and requests assistance data.

In the step 415, the E-SMLC provides the assistance data for the UE1 and requires measurement.

In the step 416, the E-SMLC provides the assistance data for the UE2 and requires measurement.

In the step 417, the UE1 performs positioning measurement.

The UE1 performs GNSS measurement using the assistance data, and generates a positioning measurement result.

In the step 418, the UE2 performs positioning measurement.

The UE2 performs GNSS measurement using the assistance data, and generates a positioning measurement result.

In the step 419, the UE1 uploads the positioning measurement result to the E-SMLC.

In the step 420, the UE2 uploads positioning measurement result to the E-SMLC.

In the step 421, the E-SMLC performs location calculation.

The E-SMLC calculates the location information of the UE1 according to the positioning measurement result of the UE1, and calculates the location information of the UE2 according to the positioning measurement result of the UE2.

In the step 422, the E-SMLC sends the location information to the MME.

The E-SMLC transmits the calculated location information of the UE1 and the UE2 to the MME.

In the step 423, the MME sends the location information to the gNB1 and the gNB2.

In an implementation, the MME sends both the location information of the UE1 and the location information of the UE2 to each of the gNB1 and the gNB2.

In another implementation, the MME sends the location information of the UE1 to the gNB1 and sends the location information of the UE2 to the gNB2, and then the gNB2 transmits the location information of the UE2 to the gNB1 through an X2 interface and the gNB1 transmits the location information of the UE1 to the gNB2 through an X2 interface.

In the step 424, the gNB1 and the gNB2 separately initiate interference coordination.

The gNB 1 initiates interference coordination according to the location information of the UE1 and the UE2, and similarly, the gNB2 initiates interference coordination according to the location information of the UE1 and the UE2.

In the step 425, the gNB1 performs analog beamforming on the UE1.

In the embodiment, the location information of the UE1 can be distinguished from that of the UE2, so that the two UEs can be distinguished from each other with an analog beam. Therefore, the gNB1 performs analog beamforming to configure a proper gain weight (for the amplitude and the phase) for a transmitting antenna to form an analog beam, and a peak direction of the analog beam is pointed towards the position of the UE1 and a trough direction of the analog beam is pointed towards the position of the UE2 respectively, thereby suppressing the interference from the UE2.

In the step 426, the gNB2 performs analog beamforming on the UE2.

Similarly, the gNB2 performs analog beamforming to configure a proper gain weight (for the amplitude and the phase) for a transmitting antenna to form an analog beam, and a peak direction of the analog beam is pointed towards the position of the UE2 and a trough direction of the analog beam is pointed towards the position of the UE1 respectively, thereby suppressing the interference from the UE1.

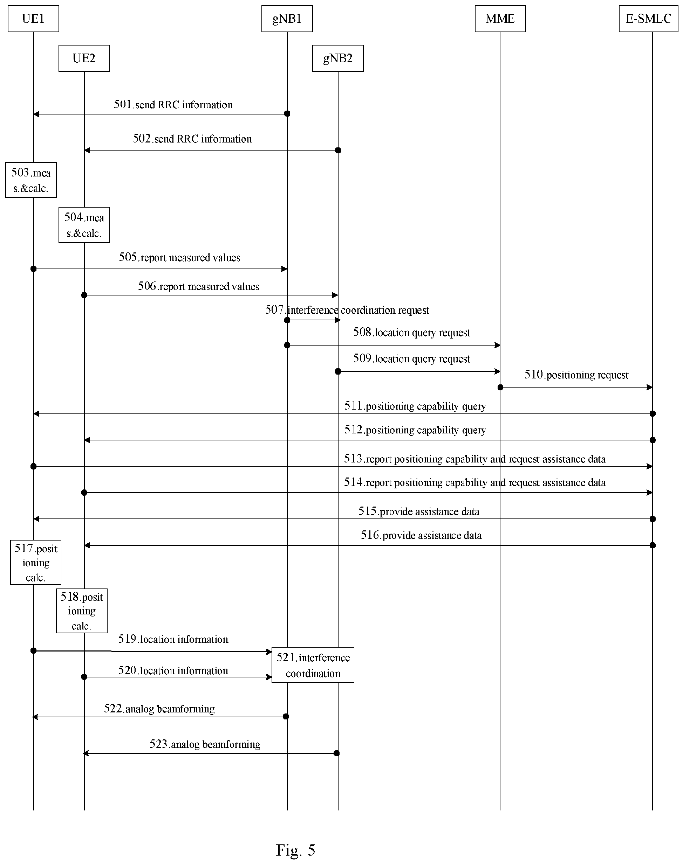

Fig. 5 is a third flowchart illustrating an inter-cell interference coordination method according to the present disclosure, and the method can be applied to the application scenario shown in Fig. 3. With reference to Fig. 5, the method includes the following steps 501 to 523.

In the step 501, the gNB1 sends RRC information to the UE1.

The gNB1 sends the RRC information to the UE1 of the cell where the gNB1 is located, so as to enable the UE1 to measure CSI-RSRP and CSI-RSRQ.

In the step 502, the gNB2 sends RRC information to the UE2.

The gNB2 sends the RRC information to the UE2 of the cell where the gNB2 is located, so as to enable the UE2 to measure CSI-RSRP and CSI-RSRQ.

In the step 503, the UE1 performs measurement and calculation.

The UE1 measures CSI-RSRP and CSI-RSRQ to generate measured values of CSI-RSRP and CSI-RSRQ. It should be noted that the UE1 can generate measured values corresponding to a plurality of cells when receiving RRC information from the plurality of cells including the interference cell.

In the step 504, the UE2 performs measurement and calculation.

The UE2 measures CSI-RSRP and CSI-RSRQ to generate measured values of CSI-RSRP and CSI-RSRQ. It should be noted that the UE2 can generate measured values corresponding to a plurality of cells when receiving RRC information from the plurality of cells including the interference cell.

In the step 505, the UE1 reports the measured values.

The UE1 reports the generated measured values to the gNB1.

In the step 506, the UE2 reports the measured values.

The UE2 reports the generated measured values to the gNB2.

In the step 507, the gNB1 sends an interference coordination request to the gNB2.

The gNB1 determines whether the UE1 is interfered according to the measured values received from the UE1. Specifically, for the measured values of CSI-RSRP and CSI-RSRQ of the plurality of cells generated by the UE1, if the measured values of CSI-RSRP and CSI-RSRQ of all the cells are less than a set threshold, two neighboring cells currently corresponding to the UE1 can be determined by finding out the largest measured value and the second largest measured value, so the interference neighboring cell corresponding to the UE1 can be determined, and then interference coordination is performed with the interference neighboring cell. In the embodiment, the gNB1 may send the interference coordination request to the gNB2 through an X2 interface when determining that the UE1 is interfered by the gNB2.

Similarly, the gNB2 determines whether the UE2 is interfered according to the measured values received from the UE2. Specifically, for the measured values of CSI-RSRP and CSI-RSRQ of the plurality of cells generated by the UE2, if the measured values of CSI-RSRP and CSI-RSRQ of all the cells are less than a set threshold, two neighboring cells currently corresponding to the UE2 can be determined by finding out the largest measured value and the second largest measured value, so the interference neighboring cell corresponding to the UE2 can be determined, and then interference coordination is performed with the interference neighboring cell. In the embodiment, the gNB2 may send the interference coordination request to the gNB 1 through an X2 interface when determining that the UE2 is interfered by the gNB 1.

In the step 508, the gNB1 sends a location query request to an MME

It should be noted that the gNB1 may send the location query request to the MME when the gNB1 determines according to the measured values from the UE1 that the UE1 is interfered or when the gNB1 receives an interference coordination request sent by an interference neighboring cell (such as the gNB2).

In the step 509, the gNB2 sends a location query request to the MME

It should be noted that the gNB2 may send the location query request to the MME when the gNB2 determines according to the measured values from the UE2 that the UE2 is interfered or when the gNB2 receives an interference coordination request sent by an interference neighboring cell (such as the gNB1).

In the step 510, the MME sends a positioning request to an E-SMLC.

The MME sends the positioning request to the E-SMLC according to the received location query request.

In the step 511, the E-SMLC sends positioning capability query information to the UE1.

In the step 512, the E-SMLC sends positioning capability query information to the UE2.

In the step 513, the UE1 reports positioning capability information to the E-SMLC and requests assistance data.

In the step 514, the UE2 reports positioning capability information to the E-SMLC and requests assistance data.

In the step 515, the E-SMLC provides the assistance data for the UE1.

In the step 516, the E-SMLC provides the assistance data for the UE2.

In the step 517, the UE1 performs positioning calculation.

The UE1 performs GNSS measurement using the assistance data, and generates corresponding location information.

In the step 518, the UE2 performs positioning measurement.

The UE2 performs GNSS measurement using the assistance data, and generates corresponding location information.

In the step 519, the UE1 uploads the location information to the gNB1.

In the step 520, the UE2 uploads the location information to the gNB2.

In the step 521, the gNB1 and the gNB2 separately initiate interference coordination.

The gNB1 transmits the location information of the UE1 to the gNB2 through an X2 interface after receiving the location information from the UE1. The gNB2 transmits the location information of the UE2 to the gNB1 through an X2 interface after receiving the location information from the UE2. The gNB1 initiates interference coordination according to the location information of the UE1 and the UE2, and similarly, the gNB2 initiates interference coordination according to the location information of the UE1 and the UE2.

In the step 522, the gNB1 performs analog beamforming on the UE1.

In the embodiment, the location information of the UE1 can be distinguished from that of the UE2, so that the two UEs can be distinguished from each other with an analog beam. Therefore, the gNB1 performs analog beamforming to configure a proper gain weight (for the amplitude and the phase) for a transmitting antenna to form an analog beam, and a peak direction of the analog beam is pointed towards the position of the UE1 and a trough direction of the analog beam is pointed towards the position of the UE2 respectively, thereby suppressing the interference from the UE2.

In the step 523, the gNB2 performs analog beamforming on the UE2.

Similarly, the gNB2 performs analog beamforming to configure a proper gain weight (for the amplitude and the phase) for a transmitting antenna to form an analog beam, and a peak direction of the analog beam is pointed towards the position of the UE2 and a trough direction of the analog beam is pointed towards the position of the UE1 respectively, thereby suppressing the interference from the UE1.

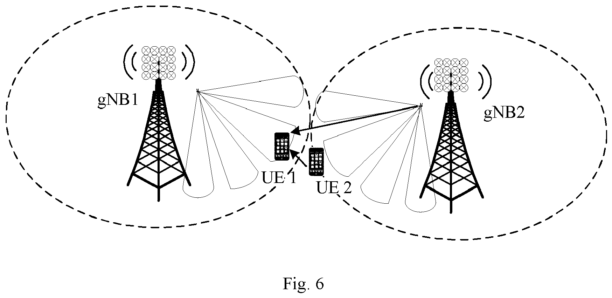

Fig. 6 is a schematic structural diagram of a third application scenario of an inter-cell interference coordination method according to the present disclosure. In this application scenario, the gNB1 in the cell and the gNB2 in the neighboring cell are both 5G NR macro base stations with the same processing capability, the expected user UE1 and the interference user UE2 are located at the edges of the two cells, the position of the UE1 cannot be distinguished from that of the UE2, and the interference in the UE1 mainly includes the downlink interference from the gNB2 and the uplink interference from the UE2.

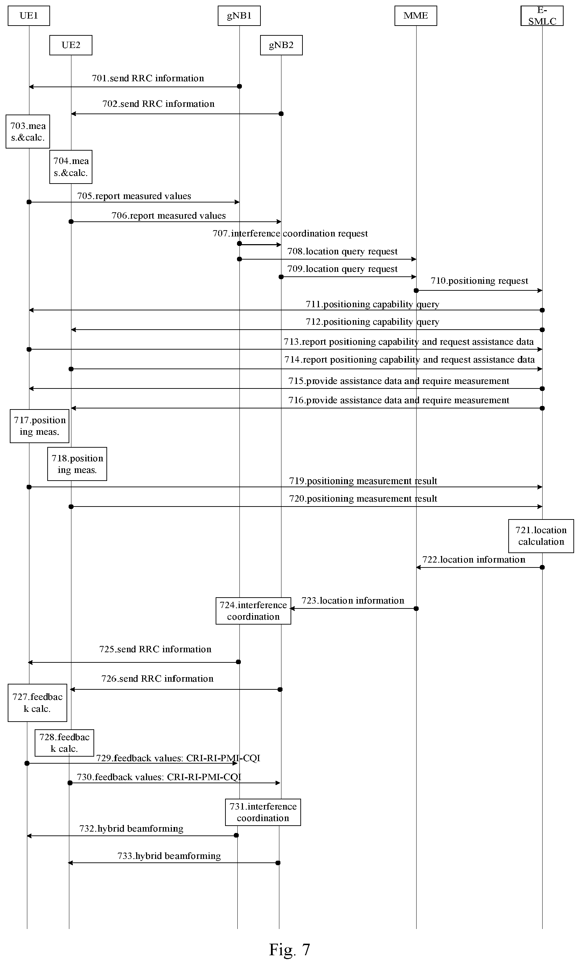

Fig. 7 is a fourth flowchart illustrating an inter-cell interference coordination method according to the present disclosure, and the method can be applied to the application scenario shown in Fig. 6. With reference to Fig. 7, the method includes the following steps 701 to 733.

In the step 701, the gNB1 sends RRC information to the UE1.

The gNB1 sends the RRC information to the UE1 of the cell where the gNB1 is located, so as to enable the UE1 to measure CSI-RSRP and CSI-RSRQ.

In the step 702, the gNB2 sends RRC information to the UE2.

The gNB2 sends the RRC information to the UE2 of the cell where the gNB2 is located, so as to enable the UE2 to measure CSI-RSRP and CSI-RSRQ.

In the step 703, the UE1 performs measurement and calculation.

The UE1 measures CSI-RSRP and CSI-RSRQ to generate measured values of CSI-RSRP and CSI-RSRQ. It should be noted that the UE1 can generate measured values corresponding to a plurality of cells when receiving RRC information from the plurality of cells including the interference cell.

In the step 704, the UE2 performs measurement and calculation.

The UE2 measures CSI-RSRP and CSI-RSRQ to generate measured values of CSI-RSRP and CSI-RSRQ. It should be noted that the UE2 can generate measured values corresponding to a plurality of cells when receiving RRC information from the plurality of cells including the interference cell.

In the step 705, the UE1 reports the measured values.

The UE1 reports the generated measured values to the gNB1.

In the step 706, the UE2 reports the measured values.

The UE2 reports the generated measured values to the gNB2.

In the step 707, the gNB1 sends an interference coordination request to the gNB2.

The gNB1 determines whether the UE1 is interfered according to the measured values received from the UE1. Specifically, for the measured values of CSI-RSRP and CSI-RSRQ of the plurality of cells generated by the UE1, if the measured values of CSI-RSRP and CSI-RSRQ of all the cells are less than a set threshold, two neighboring cells currently corresponding to the UE1 can be determined by finding out the largest measured value and the second largest measured value, so the interference neighboring cell corresponding to the UE1 can be determined, and then interference coordination is performed with the interference neighboring cell. In the embodiment, the gNB1 may send the interference coordination request to the gNB2 through an X2 interface when determining that the UE1 is interfered by the gNB2.

Similarly, the gNB2 determines whether the UE2 is interfered according to the measured values received from the UE2. Specifically, for the measured values of CSI-RSRP and CSI-RSRQ of the plurality of cells generated by the UE2, if the measured values of CSI-RSRP and CSI-RSRQ of all the cells are less than a set threshold, two neighboring cells currently corresponding to the UE2 can be determined by finding out the largest measured value and the second largest measured value, so the interference neighboring cell corresponding to the UE2 can be determined, and then interference coordination is performed with the interference neighboring cell. In the embodiment, the gNB2 may send the interference coordination request to the gNB 1 through an X2 interface when determining that the UE2 is interfered by the gNB 1.

In the step 708, the gNB1 sends a location query request to an MME

It should be noted that the gNB1 may send the location query request to the MME when the gNB1 determines according to the measured values from the UE1 that the UE1 is interfered or when the gNB1 receives an interference coordination request sent by an interference neighboring cell (such as the gNB2).

In the step 709, the gNB2 sends a location query request to the MME

It should be noted that the gNB2 may send the location query request to the MME when the gNB2 determines according to the measured values from the UE2 that the UE2 is interfered or when the gNB2 receives an interference coordination request sent by an interference neighboring cell (such as the gNB1).

In the step 710, the MME sends a positioning request to an E-SMLC.

The MME sends the positioning request to the E-SMLC according to the received location query request.

In the step 711, the E-SMLC sends positioning capability query information to the UE1.

In the step 712, the E-SMLC sends positioning capability query information to the UE2.

In the step 713, the UE1 reports positioning capability information to the E-SMLC and requests assistance data.

In the step 714, the UE2 reports positioning capability information to the E-SMLC and requests assistance data.

In the step 715, the E-SMLC provides the assistance data for the UE1 and requires measurement.

In the step 716, the E-SMLC provides the assistance data for the UE2 and requires measurement.

In the step 717, the UE1 performs positioning measurement.

The UE1 performs GNSS measurement using the assistance data, and generates a positioning measurement result.

In the step 718, the UE2 performs positioning measurement.

The UE2 performs GNSS measurement using the assistance data, and generates a positioning measurement result.

In the step 719, the UE1 uploads the positioning measurement result to the E-SMLC.

In the step 720, the UE2 uploads the positioning measurement result to the E-SMLC.

In the step 721, the E-SMLC performs location calculation.

The E-SMLC calculates the location information of the UE1 according to the positioning measurement result of the UE1, and calculates the location information of the UE2 according to the positioning measurement result of the UE2.

In the step 722, the E-SMLC sends the location information to the MME.

The E-SMLC transmits the calculated location information of the UE1 and the UE2 to the MME.

In the step 723, the MME sends the location information to the gNB1 and the gNB2.

In an implementation, the MME sends both the location information of the UE1 and the location information of the UE2 to each of the gNB1 and the gNB2.

In another implementation, the MME sends the location information of the UE1 to the gNB1 and sends the location information of the UE2 to the gNB2, and then the gNB2 transmits the location information of the UE2 to the gNB1 through an X2 interface and the gNB1 transmits the location information of the UE1 to the gNB2 through an X2 interface.

In the step 724, the gNB1 and the gNB2 separately initiate interference coordination.

The gNB 1 initiates interference coordination according to the location information of the UE1 and the UE2, and the step 725 is performed because the location information of the UE1 cannot be distinguished from that of the UE2 in this embodiment; and similarly, the gNB2 initiates interference coordination according to the location information of the UE1 and the UE2, and the step 726 is performed because the location information of the UE1 cannot be distinguished from that of the UE2.

In the step 725, the gNB1 sends RRC information to UE1.

The gNB1 sends the RRC information to the UE1 of the cell where the gNB1 is located, so as to enable the UE1 to calculate channel state information of CRI, RI, PMI and CQI.

In the step 726, the gNB2 sends RRC information to UE2.

The gNB2 sends the RRC information to the UE2 of the cell where the gNB2 is located, so as to enable the UE2 to calculate channel state information of CRI, RI, PMI and CQI.

In the step 727, the UE1 performs feedback calculation.

The UE1 is enabled to calculate feedback values of channel state information, which include a CRI, an RI, a PMI and a CQI, according to the received RRC information, and the UE1 generates the feedback values according to the requirements of maximal system capacity of digital beamforming.

In the step 728, the UE2 performs feedback calculation.

The UE2 is enabled to calculate feedback values of channel state information, which include a CRI, an RI, a PMI and a CQI, according to the received RRC information, and the UE2 generates the feedback values according to the requirements of maximal system capacity of digital beamforming.

In the step 729, the UE1 reports the feedback values to the gNB1.

The UE1 reports the feedback values generated by the calculation to the gNB1, and the feedback values include the CRI, the RI, the PMI and the CQI.

In the step 730, the UE2 reports the feedback values to the gNB2.

The UE2 reports the feedback values generated by the calculation to the gNB2, and the feedback values include the CRI, the RI, the PMI and the CQI.

In the step 731, the gNB1 and the gNB2 separately initiate interference coordination.

The gNB 1 initiates interference coordination according to the feedback values reported by the UE1, and similarly, the gNB2 initiates interference coordination according to the feedback values reported by the UE2.

In the step 732, the gNB1 performs hybrid beamforming.

The gNB1 configures a proper precoding codebook for a transmitting port under a selected analog beam according to the feedback values to form a digital beam, and the digital beam from the gNB1 is pointed towards the UE1, thereby completing interference coordination using hybrid beamforming.

In the step 733, the gNB2 performs hybrid beamforming.

The gNB2 configures a proper precoding codebook for a transmitting port under a selected analog beam according to the feedback values to form a digital beam, and the digital beam from the gNB2 is pointed towards the UE2, thereby completing interference coordination using hybrid beamforming.

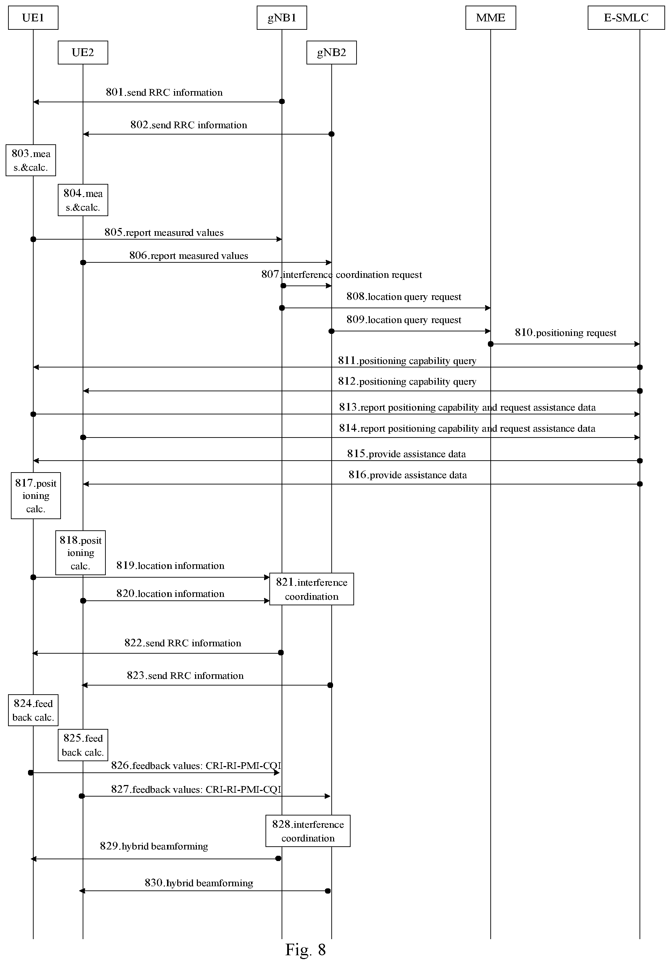

Fig. 8 is a fifth flowchart illustrating an inter-cell interference coordination method according to the present disclosure, and the method can be applied to the application scenario shown in Fig. 6. With reference to Fig. 8, the method includes the following steps 801 to 830.

In the step 801, the gNB1 sends RRC information to the UE1.

The gNB1 sends the RRC information to the UE1 of the cell where the gNB1 is located, so as to enable the UE1 to measure CSI-RSRP and CSI-RSRQ.

In the step 802, the gNB2 sends RRC information to the UE2.

The gNB2 sends the RRC information to the UE2 of the cell where the gNB2 is located, so as to enable the UE2 to measure CSI-RSRP and CSI-RSRQ.

In the step 803, the UE1 performs measurement and calculation.

The UE1 measures CSI-RSRP and CSI-RSRQ to generate measured values of CSI-RSRP and CSI-RSRQ. It should be noted that the UE1 can generate measured values corresponding to a plurality of cells when receiving RRC information from the plurality of cells including the interference cell.

In the step 804, the UE2 performs measurement and calculation.

The UE2 measures CSI-RSRP and CSI-RSRQ to generate measured values of CSI-RSRP and CSI-RSRQ. It should be noted that the UE2 can generate measured values corresponding to a plurality of cells when receiving RRC information from the plurality of cells including the interference cell.

In the step 805, the UE1 reports the measured values.

The UE1 reports the generated measured values to the gNB1.

In the step 806, the UE2 reports the measured values.

The UE2 reports the generated measured values to the gNB2.

In the step 807, the gNB 1 sends an interference coordination request to the gNB2.

The gNB1 determines whether the UE1 is interfered according to the measured values received from the UE1. Specifically, for the measured values of CSI-RSRP and CSI-RSRQ of the plurality of cells generated by the UE1, if the measured values of CSI-RSRP and CSI-RSRQ of all the cells are less than a set threshold, two neighboring cells currently corresponding to the UE1 can be determined by finding out the largest measured value and the second largest measured value, so the interference neighboring cell corresponding to the UE1 can be determined, and then interference coordination is performed with the interference neighboring cell. In the embodiment, the gNB1 may send the interference coordination request to the gNB2 through an X2 interface when determining that the UE1 is interfered by the gNB2.

Similarly, the gNB2 determines whether the UE2 is interfered according to the measured values received from the UE2. Specifically, for the measured values of CSI-RSRP and CSI-RSRQ of the plurality of cells generated by the UE2, if the measured values of CSI-RSRP and CSI-RSRQ of all the cells are less than a set threshold, two neighboring cells currently corresponding to the UE2 can be determined by finding out the largest measured value and the second largest measured value, so the interference neighboring cell corresponding to the UE2 can be determined, and then interference coordination is performed with the interference neighboring cell. In the embodiment, the gNB2 may send the interference coordination request to the gNB 1 through an X2 interface when determining that the UE2 is interfered by the gNB 1.

In the step 808, the gNB1 sends a location query request to an MME

It should be noted that the gNB1 may send the location query request to the MME when the gNB1 determines according to the measured values from the UE1 that the UE1 is interfered or when the gNB1 receives an interference coordination request sent by an interference neighboring cell (such as the gNB2).

In the step 809, the gNB2 sends a location query request to the MME

It should be noted that the gNB2 may send the location query request to the MME when the gNB2 determines according to the measured values from the UE2 that the UE2 is interfered or when the gNB2 receives an interference coordination request sent by an interference neighboring cell (such as the gNB1).

In the step 810, the MME sends a positioning request to an E-SMLC.

The MME sends the positioning request to the E-SMLC according to the received location query request.

In the step 811, the E-SMLC sends positioning capability query information to the UE1.

In the step 812, the E-SMLC sends positioning capability query information to the UE2.

In the step 813, the UE1 reports positioning capability information to the E-SMLC and requests assistance data.

In the step 814, the UE2 reports positioning capability information to the E-SMLC and requests assistance data.

In the step 815, the E-SMLC provides the assistance data for the UE1.

In the step 816, the E-SMLC provides the assistance data for the UE2.

In the step 817, the UE1 performs positioning calculation.

The UE1 performs GNSS measurement using the assistance data, and generates corresponding location information.

In the step 818, the UE2 performs positioning measurement.

The UE2 performs GNSS measurement using the assistance data, and generates corresponding location information.

In the step 819, the UE1 uploads the location information to the gNB1.

In the step 820, the UE2 uploads the location information to the gNB2.

In the step 821, the gNB1 and the gNB2 separately initiate interference coordination.

The gNB1 transmits the location information of the UE1 to the gNB2 through an X2 interface after receiving the location information from the UE1. The gNB2 transmits the location information of the UE2 to the gNB1 through an X2 interface after receiving the location information from the UE2. The gNB1 initiates interference coordination according to the location information of the UE1 and the UE2, and the step 822 is performed because the location information of the UE1 cannot be distinguished from that of the UE2 in this embodiment; and similarly, the gNB2 initiates interference coordination according to the location information of the UE1 and the UE2, and the step 823 is performed because the location information of the UE1 cannot be distinguished from that of the UE2.

In the step 822, the gNB1 sends RRC information to UE1.

The gNB1 sends the RRC information to the UE1 of the cell where the gNB1 is located, so as to enable the UE1 to calculate channel state information of CRI, RI, PMI and CQI.

In the step 823, the gNB2 sends RRC information to UE2.

The gNB2 sends the RRC information to the UE2 of the cell where the gNB2 is located, so as to enable the UE2 to calculate channel state information of CRI, RI, PMI and CQI.

In the step 824, the UE1 performs feedback calculation.

The UE1 is enabled to calculate feedback values of channel state information, which include a CRI, an RI, a PMI and a CQI, according to the received RRC information, and the UE1 generates the feedback values according to the requirements of maximal system capacity of digital beamforming.

In the step 825, the UE2 performs feedback calculation.

The UE2 is enabled to calculate feedback values of channel state information, which include a CRI, an RI, a PMI and a CQI, according to the received RRC information, and the UE2 generates the feedback values according to the requirements of maximal system capacity of digital beamforming.

In the step 826, the UE1 reports the feedback values to the gNB1.

The UE1 reports the feedback values generated by the calculation to the gNB1, and the feedback values include the CRI, the RI, the PMI and the CQI.

In the step 827, the UE2 reports the feedback values to the gNB2.

The UE2 reports the feedback values generated by the calculation to the gNB2, and the feedback values include the CRI, the RI, the PMI and the CQI.

In the step 828, the gNB1 and the gNB2 separately initiate interference coordination.

The gNB 1 initiates interference coordination according to the feedback values reported by the UE1, and similarly, the gNB2 initiates interference coordination according to the feedback values reported by the UE2.

In the step 829, the gNB1 performs hybrid beamforming.

The gNB 1 configures a proper precoding codebook for a transmitting port under a selected analog beam according to the feedback values to form a digital beam, and the digital beam from the gNB1 is pointed towards the UE1, thereby completing interference coordination using hybrid beamforming.

In the step 830, the gNB2 performs hybrid beamforming.

The gNB2 configures a proper precoding codebook for a transmitting port under a selected analog beam according to the feedback values to form a digital beam, and the digital beam from the gNB2 is pointed towards the UE2, thereby completing interference coordination using hybrid beamforming.

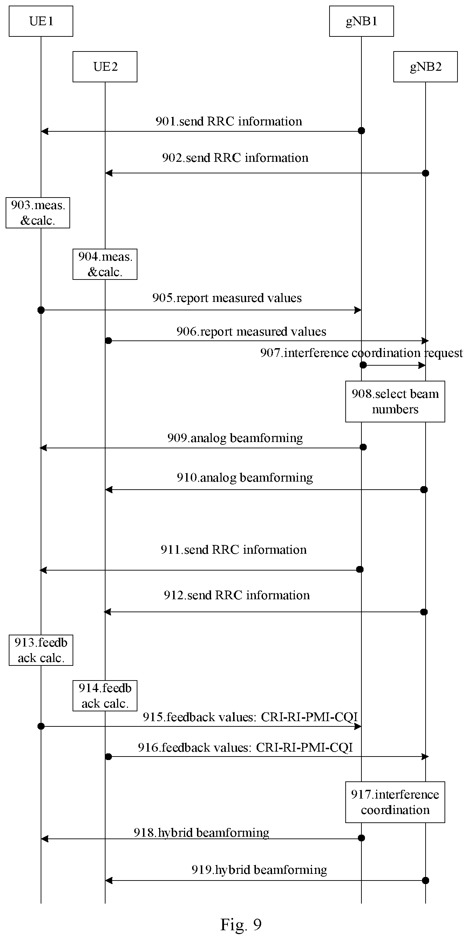

Fig. 9 is a sixth flowchart illustrating an inter-cell interference coordination method according to the present disclosure, and the method can be applied to the application scenario shown in Fig. 3 or the application scenario shown in Fig. 6. With reference to Fig. 9, the method includes the following steps 901 to 919.

In the step 901, the gNB1 sends RRC information to the UE1.

The gNB1 sends the RRC information to the UE1 of the cell where the gNB1 is located, so as to enable the UE1 to measure CSI-RSRP and CSI-RSRQ.

In the step 902, the gNB2 sends RRC information to the UE2.

The gNB2 sends the RRC information to the UE2 of the cell where the gNB2 is located, so as to enable the UE2 to measure CSI-RSRP and CSI-RSRQ.

In the step 903, the UE1 performs measurement and calculation.

The UE1 measures CSI-RSRP and CSI-RSRQ to generate measured values of CSI-RSRP and CSI-RSRQ. It should be noted that the UE1 can generate measured values corresponding to a plurality of cells when receiving RRC information from the plurality of cells including the interference cell.

In the step 904, the UE2 performs measurement and calculation.

The UE2 measures CSI-RSRP and CSI-RSRQ to generate measured values of CSI-RSRP and CSI-RSRQ. It should be noted that the UE2 can generate measured values corresponding to a plurality of cells when receiving RRC information from the plurality of cells including the interference cell.

In the step 905, the UE1 reports the measured values.

The UE1 reports the generated measured values to the gNB1.

In the step 906, the UE2 reports the measured values.

The UE2 reports the generated measured values to the gNB2.

In the step 907, the gNB 1 sends an interference coordination request to the gNB2.

The gNB1 determines whether the UE1 is interfered according to the measured values received from the UE1. Specifically, for the measured values of CSI-RSRP and CSI-RSRQ of the plurality of cells generated by the UE1, if the measured values of CSI-RSRP and CSI-RSRQ of all the cells are less than a set threshold, two neighboring cells currently corresponding to the UE1 can be determined by finding out the largest measured value and the second largest measured value, so the interference neighboring cell corresponding to the UE1 can be determined, and then interference coordination is performed with the interference neighboring cell. In the embodiment, the gNB1 may send the interference coordination request to the gNB2 through an X2 interface when determining that the UE1 is interfered by the gNB2.

Similarly, the gNB2 determines whether the UE2 is interfered according to the measured values received from the UE2. Specifically, for the measured values of CSI-RSRP and CSI-RSRQ of the plurality of cells generated by the UE2, if the measured values of CSI-RSRP and CSI-RSRQ of all the cells are less than a set threshold, two neighboring cells currently corresponding to the UE2 can be determined by finding out the largest measured value and the second largest measured value, so the interference neighboring cell corresponding to the UE2 can be determined, and then interference coordination is performed with the interference neighboring cell. In the embodiment, the gNB2 may send the interference coordination request to the gNB 1 through an X2 interface when determining that the UE2 is interfered by the gNB 1.

In the step 908, the gNB 1 and the gNB2 select beam numbers.

After receiving the interference coordination request from the neighboring cell, the gNB 1/the gNB2 selects preset beam number information paired with the interference neighboring cell for analog beamforming. The selected beam numbers are corresponding to beam pairing of the gNB1 and the gNB2. The beam pairing is a paired combination which causes relatively small mutual interference and is generated in a network planning period.

In the step 909, the gNB1 performs analog beamforming.

The gNB1 performs analog beamforming according to the selected beam number for reducing the interference from the neighboring cell. Optionally, the gNB1 further performs the step 911 to carry out digital beamforming when the gNB1 determines that both the measured value of CSI-RSRP and the measured value of CSI-RSRQ are still less than the set threshold according to the measured values of the signal receiving parameters reported by the UE1 based on the RRC information after analog beamforming is performed.

In the step 910, the gNB2 performs analog beamforming.

The gNB2 performs analog beamforming according to the selected beam number for reducing the interference from the neighboring cell. Optionally, the gNB2 further performs the step 912 to carry out digital beamforming when the gNB2 determines that both the measured value of CSI-RSRP and the measured value of CSI-RSRQ are still less than the set threshold according to the measured values of the signal receiving parameters reported by the UE2 based on the RRC information after analog beamforming is performed.

In the step 911, the gNB1 sends RRC information to UE1.

The gNB1 sends the RRC information to the UE1 of the cell where the gNB1 is located, so as to enable the UE1 to calculate channel state information of CRI, RI, PMI and CQI.

In the step 912, the gNB2 sends RRC information to UE2.

The gNB2 sends the RRC information to the UE2 of the cell where the gNB2 is located, so as to enable the UE2 to calculate channel state information of CRI, RI, PMI and CQI.

In the step 913, the UE1 performs feedback calculation.

The UE1 is enabled to calculate feedback values of channel state information, which include a CRI, an RI, a PMI and a CQI, according to the received RRC information, and the UE1 generates the feedback values according to the requirements of maximal system capacity of digital beamforming.

In the step 914, the UE2 performs feedback calculation.

The UE2 is enabled to calculate feedback values of channel state information, which include a CRI, an RI, a PMI and a CQI, according to the received RRC information, and the UE2 generates the feedback values according to the requirements of maximal system capacity of digital beamforming.

In the step 915, the UE1 reports the feedback values to the gNB1.

The UE1 reports the feedback values generated by the calculation to the gNB1, and the feedback values include the CRI, the RI, the PMI and the CQI.

In the step 916, the UE2 reports the feedback values to the gNB2.

The UE2 reports the feedback values generated by the calculation to the gNB2, and the feedback values include the CRI, the RI, the PMI and the CQI.

In the step 917, the gNB1 and the gNB2 separately initiate interference coordination.

The gNB 1 initiates interference coordination according to the feedback values reported by the UE1, and similarly, the gNB2 initiates interference coordination according to the feedback values reported by the UE2.

In the step 918, the gNB1 performs hybrid beamforming.

The gNB1 configures a proper precoding codebook for a transmitting port under the selected analog beam according to the feedback values to form a digital beam, and the digital beam from the gNB1 is pointed towards the UE1, thereby completing interference coordination using hybrid beamforming.

In the step 919, the gNB2 performs hybrid beamforming.

The gNB2 configures a proper precoding codebook for a transmitting port under the selected analog beam according to the feedback values to form a digital beam, and the digital beam from the gNB2 is pointed towards the UE2, thereby completing interference coordination using hybrid beamforming.

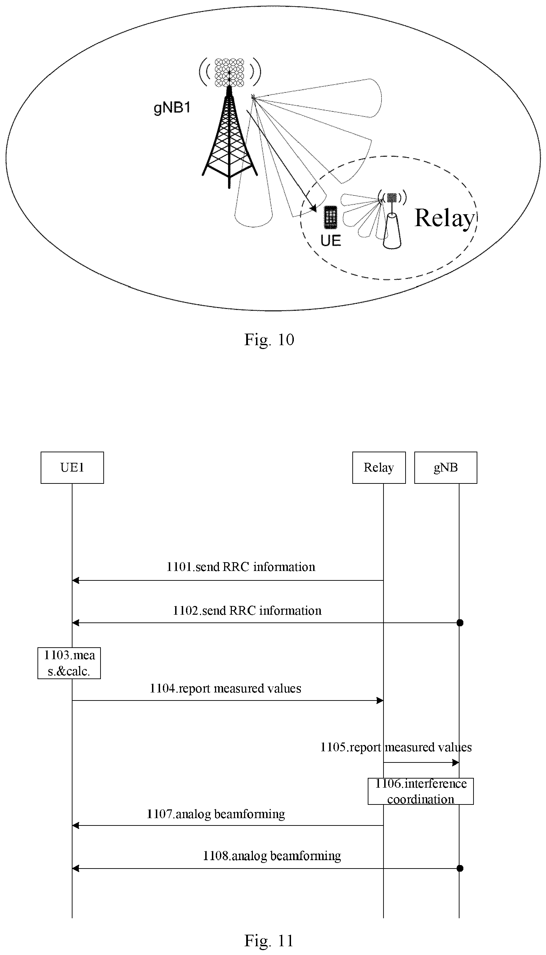

Fig. 10 is a schematic diagram of a fourth application scenario of an inter-cell interference coordination method according to the present disclosure. In this application scenario, the cell is in the form of a small cell, a relay or a pico cell, the interference base station is a macro base station (gNB) of 5G NR, a data channel of the UE communicates with the pico cell, a control channel of the UE communicates with the macro cell directly or is forwarded through the pico cell, and the UE in the pico cell is subjected to strong interference from a data channel of the macro cell.

Fig. 11 is a seventh flowchart illustrating an inter-cell interference coordination method according to the present disclosure, and the method can be applied to the application scenario shown in Fig. 10. With reference to Fig. 11, the method includes the following steps 1101 to 1108.

In the step 1101, the relay sends RRC information to a UE1.

The relay sends the RRC information to the UE1 of the cell where the relay is located, so as to enable the UE1 to measure CSI-RSRP and CSI-RSRQ.

In the step 1102, the gNB sends RRC information to the UE1.

The gNB sends the RRC information to the UE1 to enable the UE1 to measure CSI-RSRP and CSI-RSRQ.

In the step 1103, the UE1 performs measurement and calculation.

The UE1 measures CSI-RSRP and CSI-RSRQ to generate measured values of CSI-RSRP and CSI-RSRQ. It should be noted that, since the UE1 receives both the RRC information sent by the relay and the RRC information sent by the gNB, the UE1 generates the measured values of CSI-RSRP and CSI-RSRQ corresponding to the relay and the measured values of CSI-RSRP and CSI-RSRQ corresponding to the gNB.

In the step 1104, the UE1 reports the measured values to the relay.

The UE1 reports the generated measured values to the relay.

In the step 1105, the relay reports the measured values to the gNB.

After receiving the measured values, the relay reports the measured values to the gNB.

In the step 1106, the relay and the gNB separately initiate interference coordination.

When all the measured values of CSI-RSRP and CSI-RSRQ are less than the set threshold, it can be determined that the UE has moved to an area with stronger interference from the macro cell, then the relay and the gNB separately perform interference coordination according to the received measured values. Specifically, the relay and the gNB are subjected to beam pairing to select beam numbers for analog beamforming. The selected beam numbers are corresponding to the beam pairing of the relay and the gNB. The beam pairing is a paired combination which causes relatively small mutual interference and is generated in a network planning period.

In the step 1107, the relay performs analog beamforming.

The relay performs analog beamforming according to the selected beam number to ensure that a peak direction of an analog beam from the relay is pointed towards the UE1.

In the step 1108, the gNB performs analog beamforming.

The gNB performs analog beamforming according to the selected beam number to ensure that a trough direction of an analog beam from the gNB is pointed towards the UE1, so as to suppress the interference from the macro cell.

It can be seen from the above embodiments of the present disclosure that the technical solutions provided by the embodiments provide a method which can reduce the interference from the base station of the neighboring cell and the interference from the terminal of the neighboring cell by performing hybrid beamforming based on the location information or the beam number information, and the method is applicable to different cell deployment scenes and multiple interference sources, and can improve the receiving performance of a terminal and the system capacity, with no need for real-time feedback of a large amount of interference information measured by each beam. According to the embodiments, one UE can perform interference coordination according to only one piece of location information or beam number information and the measured information of CSI-RSRP and CSI-RSRQ of the cells, which greatly reduces the complexity of measurement and feedback. Moreover, the complexity of achieving interference coordination through processing of Massive MIMO is reduced through the combination of analog beamforming and digital beamforming.

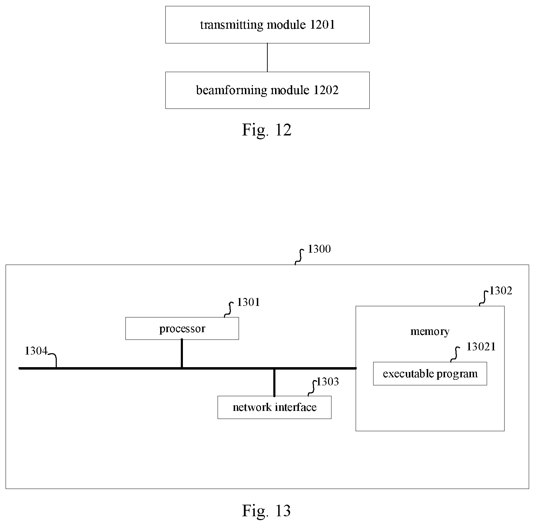

In another aspect of the embodiments of the present disclosure, an inter-cell interference coordination device based on Massive MIMO is further provided. With reference to Fig. 12, the device includes a transmitting module 1201 configured to send RRC information to a first terminal in a cell where a first base station is located; and a beamforming module 1202 configured to receive a measured value of a signal receiving parameter reported by the first terminal based on the RRC information, and perform interference coordination using a corresponding hybrid beamforming strategy according to location information of the first terminal or beam number information when it is determined that the measured value meets a set condition.

In an embodiment, the beamforming module 1202 is further configured to acquire the location information of the first terminal, determine whether the location information of the first terminal can be distinguished from location information of a second terminal in an interference neighboring cell according to the location information of the first terminal, and perform interference coordination on the first terminal using analog beamforming or digital beamforming according to whether the location information of the first terminal can be distinguished from that of the second terminal.

In an embodiment, the first base station performs interference coordination on the first terminal using analog beamforming when determining that the location information of the first terminal can be distinguished from that of the second terminal in the interference neighboring cell. Through the analog beamforming, a proper gain weight (for amplitude and phase) is configured for a transmitting antenna to form an analog beam, and a peak direction of the analog beam is pointed towards a position of the first terminal and a trough direction of the analog beam is pointed towards a position of the second terminal respectively, thereby suppressing the interference from the second terminal.

In an embodiment, the first base station performs interference coordination on the first terminal using digital beamforming when determining that the location information of the first terminal cannot be distinguished from that of the second terminal in the interference neighboring cell. In such case, the use of an analog beam cannot distinguish the first terminal from the second terminal because the location information of the first terminal cannot be distinguished from that of the second terminal, so digital beamforming is further performed, a proper precoding codebook is configured for a transmission port under a selected analog beam to form a digital beam, and the digital beam from the first base station is pointed towards the first terminal, thereby completing interference coordination using hybrid beamforming.

Optionally, the beamforming module 1202 is further configured to acquire the location information of the second terminal sent by a second base station corresponding to the interference neighboring cell before determining whether the location information of the first terminal can be distinguished from that of the second terminal in the interference neighboring cell according to the location information of the first terminal, and/or send the location information of the first terminal to the second base station corresponding to the interference neighboring cell after acquiring the location information of the first terminal.

In an embodiment, the beamforming module 1202 is further configured to receive a feedback value of channel state information reported by the first terminal based on the RRC information, and perform digital beamforming according to the feedback value. The first base station can send the RRC information to the first terminal periodically or when it is determined that digital beamforming is required, and the first terminal is enabled to calculate the feedback values of channel state information according to the received RRC information. In the embodiment, the feedback values include a CRI, an RI, a PMI and a CQI. The first terminal generates the feedback values according to the requirements of maximal system capacity of digital beamforming and reports the feedback values to the first base station, and the first base station configures a proper precoding codebook for a transmitting port under a selected analog beam according to the feedback values to form a digital beam, and the digital beam from the first base station is pointed towards the first terminal, thereby completing interference coordination using hybrid beamforming.

In an embodiment, the beamforming module 1202 acquires the location information of the first terminal by sending a positioning request for acquiring the location information of the first terminal to an MME, with the positioning request used for enabling an E-SMLC to acquire positioning capability information from the first terminal, determine the location information of the first terminal according to a measurement result of GNSS of the first terminal and return the location information of the first terminal to the MME, and receiving the location information of the first terminal returned by the MME.

Network-side GNSS is adopted in the embodiment, so that precision positioning can be achieved with the positioning accuracy of less than 5m, which facilitates performing analog beamforming based on the location information.

In an embodiment, the beamforming module 1202 acquires the location information of the first terminal by sending a positioning request for acquiring the location information of the first terminal to an MME, with the positioning request used for enabling an E-SMLC to acquire positioning capability information from the first terminal and enabling the first terminal to determine the location information thereof according to a measurement result of GNSS, and receiving the location information of the first terminal returned by the first terminal.

In the embodiment, a terminal-side GNSS measurement result is adopted to achieve analog beamforming based on the location information.

In an embodiment, the beamforming module 1202 is further configured to send a first interference coordination request to the second base station corresponding to the current interference neighboring cell of the first terminal, and perform analog beamforming on the first terminal according to the beam number information.

When the first terminal or the second terminal moves indoors or is blocked by a blocking object, the base station cannot acquire accurate location information due to poor quality of received satellite navigation signals, in which case interference coordination is performed according to the beam number information, so as to meet the interference coordination requirements of different scenes.

In an embodiment, the beamforming module 1202 is further configured to receive a measured value of a signal receiving parameter reported by the first terminal based on the RRC information, and perform interference coordination on the first terminal using digital beamforming when determining the measured value meet a set condition.

If the interference between the two cells still exists after the analog beamforming based on the beam number information is performed, for example, when the first base station determines that both the CSI-RSRP and the CSI-RSRP are less than the set threshold according to the measured values of the signal receiving parameters reported by the first terminal based on the RRC information, the first base station performs digital beamforming on the first terminal. Specifically, the first terminal is enabled to calculate the feedback values of channel state information according to the received RRC information, and the feedback values include a CRI, an RI, a PMI and a CQI. The first terminal generates the feedback values according to the requirements of maximal system capacity of digital beamforming and reports the feedback values to the first base station, and the first base station configures a proper precoding codebook for a transmitting port under the selected analog beam according to the feedback values to form a digital beam, and the digital beam from the first base station is pointed towards the first terminal, thereby completing interference coordination using hybrid beamforming.

In an embodiment, the beamforming module 1202 is further configured to select the beam number information corresponding to the beam pairing with the interference neighboring cell corresponding to the cell where the first base station is located to perform analog beamforming, with the cell where the first base station is located and the interference neighboring cell forming heterogeneous cells.

In practical applications, each module in the device may be implemented by a Central Processing Unit (CPU), a Microprocessor Unit (MPU), a Digital Signal Processor (DSP) or a Field-Programmable Gate Array (FPGA), which is disposed in the device.

The present disclosure further provides a base station. As shown in Fig. 13, a base station 1300 includes a processor 1301 and a memory 1302 configured to store a computer program capable of running on the processor 1301. The memory 1302 has an executable program 13021 stored thereon, and the processor 1301 is configured to perform the inter-cell interference coordination method according to any one of the above embodiments when running the executable program 13021. The base station further includes at least one network interface 1303. All the components of the base station are coupled together through a bus system 1304. It should be understood that the bus system 1304 is configured to enable connection and communication between the components. In addition to a data bus, the bus system 1304 further includes a power bus, a control bus and a status signal bus. For providing a clear illustration, all the buses are shown in Fig. 13 as the bus system 1304.

The present disclosure further provides a storage medium having a computer program stored thereon. When the computer program is executed by a processor, the method according to any one of the above embodiments is implemented. The storage medium may be a Ferroelectric Random Access Memory (FRAM), a Read-Only Memory (ROM), a Programmable Read-Only Memory (PROM), an Erasable Programmable Read-Only Memory (EPROM), a flash memory, a magnetic surface memory, an optical disc, a Compact Disc Read-Only Memory (CD-ROM) or other memory.

It should be understood by those of ordinary skill in the art that the embodiments of the present disclosure may be implemented as methods, systems, or computer program products. Accordingly, the embodiments of the present disclosure may take a form of an embodiment of hardware, an embodiment of software, or an embodiment of combination of software and hardware. The embodiments of the present disclosure may take a form of a computer program product operating on one or more computer-usable storage media (including, but not limited to, a disk memory, an optical memory, and the like) which contain computer-usable program codes.

The present disclosure is described with reference to the flowcharts and/or block diagrams of the methods, the devices (systems), and the computer program products provided by the embodiments of the present disclosure. It should be understood that each process and/or block in the flowcharts and/or block diagrams, and combinations of processes and/or blocks in the flowcharts and/or block diagrams may be implemented by computer program instructions. These computer program instructions may be provided for a processor of a general purpose computer, a special purpose computer, an embedded processor or other programmable data processing apparatus to produce a machine, so that the instructions, which are executed by the processor of the computer or other programmable data processing apparatus, can produce a device configured to implement the functions specified by one or more processes in the flowcharts and/or one or more blocks in the block diagrams.

These computer program instructions may also be stored in a computer-readable memory which can direct the computer or other programmable data processing apparatus to work in a particular manner, so that the instructions stored in the computer-readable memory can produce a product including a command device, the command device being capable of implementing the functions specified by one or more processes in the flowcharts and/or one or more blocks in the block diagrams.

These computer program instructions may also be loaded onto the computer or other programmable data processing apparatus to cause the computer or other programmable apparatus to perform a series of operational steps to achieve the processing implemented by a computer, so that the instructions which are executed on the computer or other programmable apparatus provide steps for implementing the functions specified by one or more processes in the flowcharts and/or one or more blocks in the block diagrams.

The embodiments described above are merely exemplary embodiments of the present disclosure, and the protection scope of the present disclosure is not limited thereto. Any change or replacement which can be readily envisaged by those of ordinary skill in the art within the technical scope of the present disclosure should be included in the protection scope of the present disclosure. The protection scope of the present disclosure should be subject to the protection scope of the appended claims.

## Claims

1. An inter-cell interference coordination method applied to a first base station, comprising:
sending Radio Resource Control, RRC, information to a first terminal in a cell where the first base station is located; and
receiving a measured value of a signal receiving parameter reported by the first terminal based on the RRC information, and performing interference coordination using a corresponding hybrid beamforming strategy according to location information of the first terminal or beam number information when it is determined that the measured value meets a set condition.

2. The inter-cell interference coordination method of claim 1, wherein the step of performing the interference coordination using the corresponding hybrid beamforming strategy according to the location information of the first terminal comprises:
acquiring the location information of the first terminal; and
determining whether the location information of the first terminal is capable of being distinguished from location information of a second terminal in an interference neighboring cell according to the location information of the first terminal, and performing the interference coordination on the first terminal using analog beamforming or digital beamforming according to whether the location information of the first terminal is capable of being distinguished from the location information of the second terminal.

3. The inter-cell interference coordination method of claim 1, wherein the step of performing the interference coordination using the corresponding hybrid beamforming strategy according to the beam number information comprises:
sending a first interference coordination request to a second base station corresponding to an interference neighboring cell of the first terminal; and
performing analog beamforming on the first terminal by using corresponding beam number information after receiving a second interference coordination request from the interference neighboring cell.

4. The inter-cell interference coordination method of claim 3, before the step of sending the first interference coordination request to the second base station corresponding to the interference neighboring cell of the first terminal, further comprising:
acquiring the location information of the first terminal; and
determining whether the location information of the first terminal is capable of being distinguished from location information of a second terminal in the interference neighboring cell according to the location information of the first terminal, and performing the interference coordination on the first terminal using analog beamforming or digital beamforming according to whether the location information of the first terminal is capable of being distinguished from the location information of the second terminal; wherein,
the step of sending the first interference coordination request to the second base station corresponding to the interference neighboring cell of the first terminal comprises:
after the interference coordination is performed on the first terminal using analog beamforming or digital beamforming according to whether the location information of the first terminal is capable of being distinguished from the location information of the second terminal, sending the first interference coordination request to the second base station corresponding to the interference neighboring cell of the first terminal when it is determined that a measured value of the signal receiving parameter reported by the first terminal based on the RRC information still meets the set condition.

5. The inter-cell interference coordination method of claim 3, after the step of performing analog beamforming on the first terminal by using the corresponding beam number information, further comprising:
receiving a measured value of the signal receiving parameter reported by the first terminal based on the RRC information, receiving a feedback value of channel state information reported by the first terminal based on the RRC information when it is determined that the measured value still meets the set condition, configuring a precoding codebook under a selected analog beam according to the feedback value to form a digital beam, and pointing the digital beam towards the first terminal.

6. The inter-cell interference coordination method of claim 2 or 4, wherein before the step of determining whether the location information of the first terminal is capable of being distinguished from the location information of the second terminal in the interference neighboring cell according to the location information of the first terminal, the method further comprises: acquiring the location information of the second terminal sent by a second base station corresponding to the interference neighboring cell; and/or,
after the step of acquiring the location information of the first terminal, the method further comprises sending the location information of the first terminal to the second base station corresponding to the interference neighboring cell.

7. The inter-cell interference coordination method of claim 2 or 4, wherein the step of performing the interference coordination on the first terminal using analog beamforming or digital beamforming according to whether the location information of the first terminal is capable of being distinguished from the location information of the second terminal comprises:
performing the interference coordination on the first terminal using analog beamforming when it is determined that the location information of the first terminal is capable of being distinguished from the location information of the second terminal; or
performing the interference coordination on the first terminal using digital beamforming when it is determined that the location information of the first terminal is not capable of being distinguished from the location information of the second terminal.

8. The inter-cell interference coordination method of claim 7, wherein the step of performing the interference coordination on the first terminal using analog beamforming comprises:
configuring a gain weight for a transmitting antenna according to the location information of the first terminal and the location information of the second terminal, forming an analog beam according to the gain weight, and pointing a peak direction of the analog beam towards a position of the first terminal and a trough direction of the analog beam towards a position of the second terminal respectively; and
the step of performing the interference coordination on the first terminal using digital beamforming comprises:
receiving a feedback value of channel state information reported by the first terminal based on the RRC information, configuring a precoding codebook under a selected analog beam according to the feedback value to form a digital beam, and pointing the digital beam towards the first terminal.

9. The inter-cell interference coordination method of claim 2 or 4, wherein the step of acquiring the location information of the first terminal comprises:
sending a positioning request for acquiring the location information of the first terminal to a Mobile Management Entity, MME, with the positioning request used for enabling an Evolved Serving Mobile Location Center, E-SMLC, to acquire positioning capability information from the first terminal, determine the location information of the first terminal according to a measurement result of Global Navigation Satellite System, GNSS, of the first terminal and return the location information of the first terminal to the MME; and
receiving the location information of the first terminal returned by the MME; or,
sending a positioning request for acquiring the location information of the first terminal to the MME, with the positioning request used for enabling the E-SMLC to acquire positioning capability information from the first terminal and enabling the first terminal to determine the location information of the first terminal according to a measurement result of GNSS of the first terminal; and
receiving the location information of the first terminal returned by the first terminal.

10. The inter-cell interference coordination method of claim 1, wherein the step of performing the interference coordination using the corresponding hybrid beamforming strategy according to the beam number information comprises:
selecting beam number information corresponding to beam pairing with an interference neighboring cell corresponding to the cell where the first base station is located to perform analog beamforming, wherein the cell where the first base station is located and the interference neighboring cell form heterogeneous cells.

11. A base station, comprising a processor and a memory configured to store a computer program capable of running on the processor; wherein,
the processor is configured to perform the inter-cell interference coordination method according to any one of claims 1 to 10 when running the computer program.

12. A storage medium having a computer program stored thereon, wherein the inter-cell interference coordination method according to any one of claims 1 to 10 is implemented when the computer program is executed by a processor.
